(19) Europäisches Patentamt
European Patent Office
Office européen des brevets

(11) **EP 3 616 309 B1**

(12) **EUROPÄISCHE PATENTSCHRIFT**

(45) Veröffentlichungstag und Bekanntmachung des Hinweises auf die Patenterteilung:
**30.08.2023   Patentblatt 2023/35**

(21) Anmeldenummer: **18720211.4**

(22) Anmeldetag: **23.04.2018**

(51) Internationale Patentklassifikation (IPC):
**H02K 15/04** (2006.01)

(52) Gemeinsame Patentklassifikation (CPC):
**H02K 15/0435; H02K 15/0442**

(86) Internationale Anmeldenummer:
**PCT/EP2018/060356**

(87) Internationale Veröffentlichungsnummer:
**WO 2018/197422 (01.11.2018 Gazette 2018/44)**

(54) **WICKELSCHABLONE, WICKELVORRICHTUNG UND VERFAHREN ZU DEREN BETRIEB JEWEILS ZUM ERZEUGEN VON SPULENWICKLUNGEN, DIE ZUM EINZIEHEN IN EINEN STATOR GEDACHT SIND**

COIL FORMER, WINDING DEVICE AND METHOD FOR THE OPERATION THEREOF TO PRODUCE COIL WINDINGS INTENDED FOR INSERTION IN A STATOR

GABARIT DE BOBINAGE, DISPOSITIF DE BOBINAGE ET PROCÉDÉ DE FONCTIONNEMENT DE CEUX-CI POUR RÉALISER DES ENROULEMENTS DE BOBINE DESTINÉS À ÊTRE INSÉRÉS DANS UN STATOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2017   DE 102017109100**

(43) Veröffentlichungstag der Anmeldung:
**04.03.2020   Patentblatt 2020/10**

(73) Patentinhaber: **Schaeffler ELMOTEC STATOMAT GmbH**
**61184 Karben (DE)**

(72) Erfinder: **SADIKU, Sadik**
**63543 Neuberg (DE)**

(74) Vertreter: **Boult Wade Tennant LLP**
**Salisbury Square House**
**8 Salisbury Square**
**London EC4Y 8AP (GB)**

(56) Entgegenhaltungen:
**EP-A1- 0 574 841        DE-A1- 3 222 181**
**DE-A1-102013 221 205**

**Beschreibung**

Die Erfindung betrifft ein Verfahren zum Erzeugen von Spulenwicklungen gemäß Anspruch 1 und eine Wickelvorrichtung gemäß Anspruch 4.

Wickelvorrichtungen zum Erzeugen von Spulenwicklungen zum späteren Einziehen in Einziehnuten eines Statorträgers und zum Bestücken eines Einziehwerkzeuges zum gruppenweisen Einziehen der Spulenwicklungen in einen Stator sind aus dem Stand der Technik bekannt. Die Spulenwicklungen werden durch wendelförmiges Wickeln von Leiterdraht, typischerweise Kupferlackdraht, um eine Wickelschablone erzeugt und anschließend in einem Einziehwerkzeug abgelegt. Hierzu wird der Leiterdraht von einem Drahtspeicher kommend über eine Drahtzufuhreinrichtung zur Wickelschablone geführt. Man unterscheidet zwischen sogenannten Flyer-Verfahren, bei denen die Drahtzufuhreinrichtung um die Schablone herumgeführt wird, und Wickelverfahren, bei denen die Wickelschablone rotiert wird.

Des Weiteren ist es bekannt, mehrere Leiterdrähte nebeneinander zur Wickelschablone zu führen und so gleichzeitig mehrere parallel verlaufende Leiterwicklungen auf die Schablone aufzubringen.

Das Einziehwerkzeug weist einen Kranz aus einer Vielzahl von über den Umfang gleichmäßig verteilten Einziehlamellen auf. Wenn die Spulenwicklungen einer Stromphase um die Einziehlamellen gelegt sind, werden die freien Enden der Einziehlamellen durch eine vordere Öffnung bis zu einer hinteren Öffnung eines Statorträgers geführt. Mittels eines Einziehsterns, der mit Vorsprüngen durch die Zwischenräume zwischen den Einziehlamellen fährt, werden die Spulenwicklungen durch den Statorträger gezogen und fallen in geordneter Wicklungsreihenfolge aus dem Einziehwerkzeug heraus in Einziehnuten zwischen Statorzähnen des Statorträgers. Auf diesen an sich bekannten Vorgang soll hier nicht näher eingegangen werden, weil er nicht unmittelbar Gegenstand der vorliegenden Erfindung ist. Allerdings ist festzuhalten, dass der Einziehvorgang relativ schnell durchgeführt werden kann, während das Wickeln der einzelnen Spulenwicklungen in der Summe mehr Zeit beansprucht. Außerdem ist das korrekte Ablegen der einzelnen Windungen einer Spulenwicklung in dem Einziehwerkzeug ausschlaggebend, um einen hohen Füllfaktor der Einziehnuten zu erreichen und Effizienzverluste des Motors durch Wirbelströme in den Einziehnuten zu vermeiden. Als mechanischer Füllfaktor wird die in den zur Verfügung stehenden Wickelraum, insbesondere der Einziehnut, eingebrachte Menge an elektrischen Leiterdrähten einschließlich deren Isolationsschicht bezeichnet. Das bedeutet, dass es beim Wickeln und beim Abstreifen der Spulenwicklungen zu vermeiden ist, dass Windungen des Leiterdrahtes benachbarte Windungen überholen. Das wird im Stand der Technik jedoch oftmals nicht erreicht. In der Vergangenheit war die Effizienz großer Elektromotoren aufgrund des Netzbetriebes auch vielfach nicht vollständig ausgereizt. Bei einem mobilen Einsatz mit Akkumulatoren kommt der Effizienz eine besonders hohe Bedeutung zu, insbesondere im Bereich der E-Mobilität.

Ein weiterer Nachteil des Standes der Technik ist eine sehr große Länge der Wickelschablonen, um die notwendige Anzahl an Windungen für die Einziehnuten größerer Statoren komplett auf der Schablone ablegen zu können. Dies führt zu massiven und trägen Ausgestaltungen der Schablonen, damit diese während des Wickelvorgangs lagetreu und formstabil sind. Das macht die Maschinen groß und teuer in der Anschaffung und resultiert in großen Aufstellflächen. Das Problem ist besonders ausgeprägt bei einer Paralleldrahtwicklung und -führung von mehreren gespannten Einzeldrähten als Paket, weil dies zu einem erheblichen Zugkraftanstieg mit der Gefahr einer Beschädigung der zu wickelnden Drähte oder der Vorrichtung führt.

Verfahren und Vorrichtungen der zuvor erörterten Art sind aus der DE 32 22 181 A, der EP 0 574 841 A1 und der DE 10 2013 221 205 A1 bekannt, letztere beschreibt eine Variation der Anordnungsreihenfolge von Teilleitern mittels einer Wendevorrichtung.

Die Aufgabe der Erfindung ist es daher, die Nachteile des Standes der Technik zu überwinden, und eine Lösung zu finden, mit der sich kostengünstig Spulenwicklungen zum späteren Einziehen in Statoren herstellen lassen, die zudem die Voraussetzung schafft einen Stator mit hohem Füllfaktor der Einziehnuten sowie einer hohen Effizienz des Elektromotors bereitstellen zu können. Hierzu soll nach Möglichkeit eine hohe Fertigungsgeschwindigkeit der Spulenwicklung bei kompakter Maschinengröße beitragen. Die Lösung soll zudem einfach handhabbar und zuverlässig im Betrieb sein.

Hauptmerkmale der Erfindung ergeben sich aus Anspruch 1 und aus Anspruch 4. Ausgestaltungen sind Gegenstand der Ansprüche 2 bis 3 und 5 bis 10.

Für das erfindungsgemäße Verfahren zum Erzeugen von Spulenwicklungen ist zunächst ein Wickeln von Leiterdraht auf die Wickelschablone entlang des wendelförmigen Wickelpfads durch Drehen der Wickelschablone vorgesehen. Dann erfolgt ein Drehen eines Legemusters einer Mehrzahl an parallelen Leiterdrähten um 180 Grad oder einem Vielfachen hiervon nach jeder halben oder ganzen Umdrehung der Wickelschablone zur Herstellung von Verdrillungen, die später beim Einziehen der Spulenwicklungen in die Einziehnuten (72) an den Statorenden außerhalb der Einziehnuten (72) positioniert werden. Anschließend erfolgt ein Legen der entlang des wendelförmigen Wickelpfads verlaufenden Windungen des Leiterdrahtes um eine oder einen Teil der Einziehlamellen des Einziehwerkzeuges. Danach kommt es zu einem Abstreifen der entlang des wendelförmigen Wickelpfads verlaufenden Windungen des Leiterdrahtes von der Wickelschablone und einem Ablegen dieser Windungen in dem Einziehwerkzeug.

Die Erfindung betrifft ferner eine Wickelvorrichtung mit einer Wickelschablone die an einem Drehantrieb gelagert ist, und mit einem Einziehwerkzeug, das einen Kranz aus parallel sowie geodätisch vertikal ausgerichteten Einziehlamellen aufweist, wobei die Wickelschablone und das Einziehwerkzeug derart zueinander bewegbar gelagert sind, dass eine auf der Wickelschablone aus Leiterdraht gewickelte Spulenwicklung von oben um eine oder einen Teil der Einziehlamellen legbar ist, wobei erfindungsgemäß vorgesehen ist, dass die Wickelschablone eine Drahtzufuhreinrichtung aufweist, die derart mit einer Wendeeinrichtung gekoppelt ist, dass die Drahtzufuhreinrichtung mit dieser um 180 Grad (oder einem Vielfachen hiervon) hin- und herschwenkbar ist, wobei die Wickelschablone ein Schablonenvorderteil und ein Schablonenhinterteil aufweist, wobei das Schablonenvorderteil und das Schablonenhinterteil mit einer Umfangsfläche einen wendelförmigen Wickelpfad um eine Wendelachse für den Leiterdraht aufspannen mit der Drahtzufuhreinrichtung gleichzeitig ein erster Teil der Mehrzahl an Leiterdrähten parallel zueinander in einer ersten Schicht auf dem Wickelpfad und ein zweiter Teil der Mehrzahl an Leiterdrähten parallel zueinander in einer zweiten Schicht auf der ersten Schicht ablegbar ist.

Die Vorteile entsprechen denjenigen der Wickelschablone wie nachstehend beschrieben als solches, wobei insbesondere hervorzuheben ist, dass die Summe der Drahtlänge pro Umdrehung der Wickelschablone im Verhältnis zum Längenbedarf entlang der Wickelschablone hoch auslegbar ist.

Entlang des Wickelpfades sind Stützelemente angeordnet, die über die Umfangsfläche hinausstehen und den wendelförmigen Wickelpfad seitlich begrenzen, insbesondere abschnittsweise.

Der Vorteil der Stützelemente ist, dass verhindert werden kann, dass einzelne Windungen der Spulenwicklungen beim Abstreifen die Reihenfolge ändern. Ein weiterer Vorteil ist, dass es die Stützelemente erlauben eine mehrschichtige Wicklung auf die Wickelschablone aufzubringen. Die notwendige Länge der Wickelschablone kann hierdurch in etwa um den Faktor reduziert werden, welcher der Anzahl der Schichten entspricht, d.h. bei zwei Schichten ist nur eine halb so lange Wickelschablone notwendig, um eine Spulenwicklung mit gleicher Leiterlänge zu wickeln. Damit kann die gesamte Maschine kompakter ausgelegt werden, weil von den gespannten Leiterdrähten weniger große Hebelkräfte auf die Schablone wirken. Die Leiterdrähte sollten alle den gleichen Durchmesser haben. Das macht die Maschine kostengünstig und die notwendige Aufstellfläche klein. Die Wickelschablone dient insbesondere der Vorbereitung eines Einziehens der Spulenwicklungen in einen Statorträger beziehungsweise dessen Einziehnuten.

Gemäß einer speziellen Ausgestaltung sind die Stützelemente derart angeordnet, dass der wendelförmige Wickelpfad eine homogene Breite aufweist. Dies unterstützt insbesondere ein Zusammenhalten der benachbart zwischen den Stützelementen liegenden Leiterdrähte. Hierdurch treibt beispielsweise eine zweite Schicht an Leiterdrähten auf der ersten Schicht, die unteren Leiterdrähte nicht auseinander. Vorzugsweise sind die Stützelemente länglich und zwischen quer zur Wendelachse bis parallel zum Wickelpfad ausgerichtet. Dadurch können die Windungen des Wickelpfades eng beieinanderliegen. Hierzu trägt auch bei, wenn die Breite der Stützelemente quer zum Wickelpfad vorzugsweise maximal dem 3-fachen, weiter bevorzugt maximal dem 2-fachen und besonders bevorzugt maximal dem 1,5-fachen des Durchmessers des zu wickelnden Leiterdrahts beträgt.

Bei einer Ausführungsvariante stehen die Stützelemente wenigstens um das 1,5-fache, vorzugsweise maximal um das 3-fache, des Durchmessers des zu wickelnden Leiterdrahts über die Umfangsfläche hinaus. Ab circa dem 1,5-fachen des Durchmessers des Leiterdrahtes ist eine seitliche Abstützung einer zweiten Schicht an Leiterdrähten möglich. Die bevorzugte Obergrenze, nämlich das 3-fache des Durchmessers des Leiterdrahts, ermöglicht eine seitliche Abstützung einer dritten Schicht an Leiterdrähten. Bis zu dieser Höhe, können die Stützelemente noch verhältnismäßig schmal ausgestaltet werden, sodass der Abstand zwischen zwei benachbarten Windungen des Wickelpfades geringgehalten wird. Außerdem ist es bis zu dieser Obergrenze noch durch geeignete Maßnahmen möglich, die Spulenwicklungen von der Wickelschablone abzustreifen und in einem Einziehwerkzeug abzulegen.

Erfindungsgemäß ist vorgesehen, dass die Wickelschablone eine Drahtzufuhreinrichtung für eine Mehrzahl an Leiterdrähten aufweist, mit der gleichzeitig ein erster Teil der Mehrzahl an Leiterdrähten parallel zueinander in einer ersten Schicht auf dem Wickelpfad und ein zweiter Teil der Mehrzahl an Leiterdrähten parallel zueinander in einer zweiten Schicht auf der ersten Schicht ablegbar ist. Vorteilhaft hieran ist, dass die Mehrzahl an Leiterdrähten auf die Wickelschablone gewickelt wird, wobei die Summe der Drahtlänge pro Umdrehung der Wickelschablone im Verhältnis zum Längenbedarf entlang der Wickelschablone hoch ist. Die Schichten werden vorzugsweise gleichzeitig auf die Schablone aufgebracht. Bevorzugt beträgt die Mehrzahl an Leiterdrähten maximal 40, weiter bevorzugt maximal 35 und besonders bevorzugt maximal 30. Außerdem beträgt die Mehrzahl an Leiterdrähten vorzugsweise wenigstens 4, weiter bevorzugt wenigstens 5, noch weiter bevorzugt wenigstens 6 und besonders bevorzugt wenigstens 8.

Bei einer speziellen Ausgestaltung weist die Drahtzufuhreinrichtung Einzeldrahtführungen für die Mehrzahl an Leiterdrähten auf, wobei die Einzeldrahtführungen für den ersten Teil der Mehrzahl an Leiterdrähten entlang einer ersten Reihe angeordnet sind, und wobei die Einzeldrahtführungen für den zweiten Teil der Mehrzahl an Leiterdrähten entlang einer zweiten Reihe angeordnet sind. Damit werden die Leiterdrähte bereits vor dem Ablegen auf der Wickelschablone in zwei Schichten sortiert. Hierzu sollten die erste und die zweite Reihe parallel zueinander sowie benachbart angeordnet sein.

In der praktischen Anwendung hat es sich als besonders praktikabel erwiesen, wenn der zweite Teil der Mehrzahl an Leiterdrähten der Rest der Mehrzahl an Leiterdrähten ist. Damit sind alle Leiterdrähte auf die erste und zweite Schicht aufgeteilt.

Alternativ ist jedoch auch eine Ausführungsform der Werkzeugschablone möglich, bei der diese eine Drahtzufuhreinrichtung für eine Mehrzahl an Leiterdrähten aufweist, mit der gleichzeitig ein erster Teil der Mehrzahl an Leiterdrähten parallel zueinander in einer ersten Schicht auf dem Wickelpfad, ein zweiter Teil der Mehrzahl an Leiterdrähten parallel zueinander in einer zweiten Schicht auf der ersten Schicht und der restliche Teil der Mehrzahl an Leiterdrähten parallel zueinander in einer dritten Schicht auf der zweiten Schicht ablegbar ist. Hierdurch lassen sich noch mehr Wicklungen pro Schablonenlänge auf der Wickelschablone ablegen. Grundsätzlich könnten sogar noch mehr als drei Schichten an Leiterdrähten vorgesehen werden. Bei Zugrundelegung einer Obergrenze von maximal 40 Leiterdrähten genügt jedoch eine maximal fünfschichtige Ausführung.

Die erfindungsgemäßen Stützelemente verhindern insbesondere, dass die Leiterdrähte der ersten Schicht verrutschen. Zusätzlich sollten die Stützelemente verhindern, dass die Leiterdrähte der zweiten Schicht auf die Umfangsfläche fallen oder zwischen die Leiterdrähte der ersten Schicht geraten. Entsprechendes gilt für die Ausführungsvarianten, bei denen mehr als zwei Schichten vorgesehen sind.

Von Vorteil ist eine Ausgestaltung, bei der die homogene Breite des wendelförmigen Wickelpfads breiter ist als die Summe der Durchmesser der Leiterdrähte der ersten Schicht. Damit passen die Leiterdrähte der ersten Schicht ohne Quetschung und/oder Beschädigung zwischen die Stützelemente. Es ist außerdem zu bevorzugen, wenn die homogene Breite des wendelförmigen Wickelpfads kleiner ist als die Summe der Durchmesser der Leiterdrähte der ersten Schicht zuzüglich des Durchmessers eines weiteren (nicht vorhandenen) Leiterdrahts. Damit passt kein zusätzlicher Leiterdraht mehr zwischen die Stützelemente, wodurch die Leiterdrähte der zweiten Schicht nicht auf die Umfangsfläche fallen bzw. zwischen die Leiterdrähte der ersten Schicht drängen.

Damit möglichst viele Leiterdrähte zwischen den Stützelementen geschichtet werden können, bietet sich eine Anordnung an, nach der die Anzahl der Leiterdrähte in der ersten Schicht der Anzahl der Leiterdrähte in der zweiten Schicht und sofern vorhanden der weiteren Schichten entspricht.

Des Weiteren ist bei einer speziellen Ausführungsform der Wickelschablone vorgesehen, dass die Stützelemente erste Stützelemente umfassen, die in die Umfangsfläche absenkbar, vorzugsweise komplett versenkbar, sind. Das erleichtert das Abstreifen der Spulenwicklungen von der Wickelschablone.

Dabei ist eine Ausgestaltung zu bevorzugen, bei der mehrere oder alle der ersten Stützelemente gemeinsame Antriebsmittel aufweisen. Hierdurch ist ein automatisiertes Absenken der Stützelemente möglich und die Kosten für das gemeinsame Antriebsmittel sind gering.

Eine konstruktiv einfache Ausgestaltung gelingt, wenn mehrere oder alle der ersten Stützelemente auf einem gemeinsamen Trägerelement angeordnet sind, wobei das Trägerelement inklusive diesen ersten Stützelementen relativ zur Umfangsfläche absenkbar ist. Bevorzugt handelt es sich bei dem Trägerelement um eine längliche Trägerleiste. Eine solche Trägerleiste kann parallel zur Wickelachse ausgerichtet sein. Dies ist konstruktiv einfach und kostengünstig umsetzbar. Außerdem kann eine solche Trägerleiste in einer Nut im Schablonenvorderteil oder Schablonenhinterteil absenkbar gelagert sein. Auch das ist konstruktiv mit wenig Aufwand umsetzbar. Die Nut kann nämlich in Richtung Umfangsfläche offen ausgestaltet sein. Vorzugsweise sind die ersten Stützelemente entlang der Trägerleiste angeordnet. Außerdem ist es zu bevorzugen, wenn die Trägerleiste in einer nicht abgesenkten Position, d.h. insbesondere während dem Wickeln, einen Teil der Umfangsfläche ausbildet oder Abschnitte des Wickelpfads ausbildet.

Es besteht eine Ausgestaltungsoption derart, dass das gemeinsame Antriebsmittel ein Schieberelement ist, das entlang einer Schieberachse verschiebbar gelagert ist, wobei die Schieberachse quer zu einer Bewegungsrichtung der absenkbaren ersten Stützelemente ausgerichtet ist, und wobei das Schiebeelement kinematisch mit den absenkbaren ersten Stützelementen gekoppelt ist. Mittels des Schieberelements kann ein Antriebsmotor außerhalb von dem Schablonenvorderteil und dem Schablonenhinterteil der Wickelschablone angeordnet werden. Für die kinematische Kopplung ist beispielsweise ein Kurvengetriebe bzw. eine Steuerkurve geeignet.

In einer weiteren Ausgestaltungsvariante ist vorgesehen, dass die Stützelemente zweite Stützelemente umfassen, die nicht in die Umfangsfläche absenkbar sind. Diese Stützelemente sind besonders einfach und kostengünstig in der Herstellung. Außerdem sind diese besonders betriebssicher.

Gemäß einer speziellen Ausführungsform der Wickelschablone weist der wendelförmige Wickelpfad eine erste Aufspannrichtung und eine hierzu quer ausgerichtete zweite Aufspannrichtung auf, wobei das Schablonenvorderteil und das Schablonenhinterteil derart relativ zueinander gelagert sind, dass eine erste Spannweite des wendelförmigen Wickelpfads in der ersten Aufspannrichtung durch Einstellen der Position des Schablonenvorderteils und/oder des Schablonenhinterteils einstellbar ist, und wobei eine zweite Spannweite des wendelförmigen Wickelpfads in der zweiten Aufspannrichtung ausgebildet ist. Damit kann die erste Spannweite nach dem Aufwickeln reduziert werden, was das Abstreifen der aufgewickelten Spulenwicklungen erleichtert. Vorzugsweise ist die erste Spannweite des wendelförmigen Wickelpfads in der ersten Aufspannrichtung durch Einstellen der Position des Schablonenvorderteils und/oder des Schablonenhinterteils entlang der ersten Aufspannrichtung einstellbar.

Für eine automatisierte Nutzung ist es zu bevorzugen, wenn die Wickelschablone einen Stelltrieb aufweist, mit dem das Einstellen der Position des Schablonenvorderteils und/oder des Schablonenhinterteils erfolgt.

Ferner ist in einer Ausgestaltungsvariante angedacht, dass die ersten Stützelemente in Richtung der zweiten Aufspannrichtung ausgerichtet sind. Die Spannweite in der zweiten Aufspannrichtung ist nämlich bevorzugt nicht veränderbar, wodurch das Abstreifen der Spulenwicklungen über die hier angeordneten Stützelemente erschwert ist. Durch das mögliche Absenken der hier sitzenden ersten Stützelemente, können die Spulenwicklungen die ersten Stützelemente leicht überwinden. Vorzugsweise sind die ersten Stützelemente ausschließlich am Schablonenvorderteil angeordnet. Hier ist die Bewegungsfreiheit der Spulenwicklungen beim Abstreifen nämlich aufgrund der Führung in den Einziehlamellen eingeschränkt. Herstellkosten für absenkbare erste Stützelemente fallen so nur für das Schablonenvorderteil, nicht jedoch für das Schablonenhinterteil an.

Eine Ausführungsform der Wickelschablone sieht vor, dass wenigstens ein Teil der zweiten Stützelemente in Richtung der ersten Aufspannrichtung ausgerichtet sind. Aufgrund der vorzugsweise veränderbaren Spannweite in der ersten Aufspannrichtung, ist es nicht erforderlich, die zweiten Stützelemente abzusenken. Die recht formstabilen Spulenwicklungen gleiten ohne weiteres über die zweiten Stützelemente, sobald die Spannweite reduziert ist. Ein Teil der zweiten Stützelemente kann auch in Richtung der zweiten Aufspannrichtung ausgerichtet sein. Vorzugsweise ist wenigstens ein Teil der zweiten Stützelemente, vorzugsweise alle zweiten Stützelemente, am Schablonenhinterteil angeordnet. Hier können die nicht absenkbaren zweiten Stützelemente bei einer Verringerung der Spannweite in der ersten Aufspannrichtung verhältnismäßig einfach über die zweiten Stützelemente abrutschen.

Besonders geeignet sind zahlreiche der optionalen Merkmale, wenn die erste Spannweite größer ist als die zweite Spannweite. Dadurch ist zum Beispiel die Verstellung der Spannweite in der ersten Aufspannrichtung erleichtert, ohne dass das Schablonenvorderteil und das Schablonenhinterteil instabil werden. Außerdem resultieren hierdurch längliche ovale bis rechteckige Spulenwicklungen, die mit einer ihrer kurzen Seiten auf das Einziehwerkzeug gefädelt werden.

Die zweite Spannweite des wendelförmigen Wickelpfads ist vorzugsweise unveränderbar. Das hält die Komplexität und Feingliedrigkeit der Wickelschablone gering und deren Steifigkeit hoch.

Bei einer speziellen Ausführungsform sind das Schablonenvorderteil und das Schablonenhinterteil an einer Schablonenbasis angeordnet. Zwar sind auch Ausgestaltungen möglich, bei denen das Schablonenvorderteil und das Schablonenhinterteil direkt miteinander verbunden sind. Mit einer Schablonenbasis gelingt jedoch meist eine stabilere Lagerung von diesen. Dabei kann das Schablonenvorderteil und/oder das Schablonenhinterteil fest mit der Schablonenbasis verbunden oder einteilig hiermit ausgebildet sein. Das ist besonders stabil. Bevorzugt ist jedoch wenigstens eines der Teile aus der Gruppe Schablonenvorderteil und Schablonenhinterteil bewegbar an der Schablonenbasis gelagert. Damit kann die Schablonenform durch die Bewegung verändert werden, vorzugsweise in einer Erstreckung verkürzt werden. Besonders zu bevorzugen ist eine Ausgestaltung, nach der das Schablonenvorderteil und/oder das Schablonenhinterteil längsverschiebbar an der Schablonenbasis gelagert sind. Damit ist die Verstellung der Wickelschablone über die gesamte Länge gleichmäßig auslegbar.

An der Schablonenbasis kann ein Koppelmittel zur Anbindung an einen Rotationsantrieb angeordnet sein, wobei das Koppelmittel eine Drehachse der Wickelschablone definiert. Damit ist die Wickelschablone mit einem Drehantrieb verbindbar. Vorzugsweise ist das Koppelmittel auf einer Rückseite der Schablonenbasis angeordnet. Das Schablonenvorderteil und das Schablonenhinterteil sind vorzugsweise auf einer Vorderseite der Schablonenbasis angeordnet.

Des Weiteren sollte die Wickelschablone eine Drahtfixierung im Bereich des Anfangs des Wickelpfades aufweisen. In dieser können die Enden des oder der Leiterdrähte vor dem Aufwickeln fixiert werden.

Gemäß einer speziellen Ausführungsform ist der wendelförmige Wickelpfad in Wickelstufen unterteilt, wobei der Umfang einer Windung um die Wickelschablone vom Anfang des wendelförmigen Wickelpfads hin zum Ende des wendelförmigen Wickelpfads stufenweise abnimmt, insbesondere entsprechend der Wickelstufen. Damit lassen sich Spulenwicklungen mit unterschiedlichen Umfangslängen und/oder für abweichende Lamellenpositionen im Einziehwerkzeug herstellen. Die Wicklungen jeder Wickelstufe werden dann später in unterschiedlichen Einziehnuten eines Statorträgers gezogen.

Typischerweise sind die Einziehlamellen an ihrem unteren Ende befestigt und an ihrem oberen Ende freistehend. Außerdem bietet es sich an, das Einziehwerkzeug auf einem Werkzeugtisch anzuordnen. Letzterer ist vorzugsweise mit dem Einziehwerkzeug drehbar und/oder verschiebbar gelagert. Hierdurch kann das Einziehwerkzeug zu der Wickelschablone positioniert werden. Bevorzugt ist die Wickelschablone hängend unterhalb des Drehantriebs gelagert. Außerdem sollte die Wickelvorrichtung einen Drahtspeicher, insbesondere mit einem Drahtvorrat, aufweisen.

Beim Wickeln von Spulenwicklungen in mehr als einer Schicht, bietet es sich an, den Abstand zwischen den Einziehlamellen geringfügig größer auszubilden, als den Faktor aus dem Durchmesser eines Leiterdrahts und der Anzahl an Schichten, d.h. Abstand > (Durchmesser eines Leiterdrahts) x (Anzahl der Schichten). Er sollte jedoch kleiner sein als der Faktor aus dem Durchmesser eines Leiterdrahts und der Anzahl an Schichten zzgl. 1, d.h. Abstand < (Durchmesser eines Leiterdrahts) x (Anzahl der Schichten + 1). Damit können die zunächst übereinanderliegenden Leiter zwischen den Lamellen weiterhin benachbart liegen und außerdem gleichzeitig, d.h. parallel zueinander in die Einziehnut geschoben werden. Hierdurch ist das Einziehen besonders schnell pro Leiterdraht und es wird ein hoher Füllfaktor erreicht.

In einer weiteren Ausgestaltung des Verfahrens kann vorgesehen sein, dass die entlang des wendelförmigen Wickelpfads verlaufenden Windungen des Leiterdrahtes von der Wickelschablone über die Stützelemente hinweg abgestreift werden und diese Windungen in dem Einziehwerkzeug abgelegt werden. Verfahrensgemäß verhindern die Stützelemente bis zum Abstreifen eine Lageänderung der einzelnen Windungen des Leiterdrahtes. Dies resultiert letztlich in einem hohen erreichbaren Füllfaktor der Einziehnuten sowie wenig Wirbelströmen und hoher Effizienz des Stators.

Die Schritte des Wickelns, Legens und Abstreifens werden vorzugsweise wiederholt bis wenigstens alle Spulenwicklungen einer Phase eines Stators eines Elektromotors in dem Einziehwerkzeug abgelegt sind.

In einem speziellen Verfahrensdesign stehen die Stützelemente wenigstens um das 1,5-fache, vorzugsweise maximal um das 3-fache, des Durchmessers des zu wickelnden Leiterdrahts über die Umfangsfläche hinaus, wobei die Wickelschablone eine Drahtzufuhreinrichtung für eine Mehrzahl an Leiterdrähten aufweist, mit der beim Wickeln gleichzeitig ein erster Teil der Mehrzahl an Leiterdrähten parallel zueinander in einer ersten Schicht auf dem Wickelpfad und ein zweiter Teil der Mehrzahl an Leiterdrähten parallel zueinander in einer zweiten Schicht auf der ersten Schicht abgelegt wird. Damit wird erreicht, dass die Summe der Drahtlänge pro Umdrehung der Wickelschablone im Verhältnis zum Längenbedarf entlang der Wickelschablone hoch ist. Entsprechend kurz, stabil und lagetreu ist die Wickelschablone während der wickelbedingten Zugkraft, welche die gespannten Leiterdrähte ausüben.

Gemäß einer weiteren Verfahrensoption ist vorgesehen, dass die Stützelemente erste Stützelemente umfassen, die in die Umfangsfläche absenkbar sind, wobei die ersten Stützelemente nach dem Legen der Windungen um die Einziehlamellen und vor dem Abstreifen der Windungen von der Wickelschablone in die Umfangsfläche abgesenkt werden. Dies erleichtert das Abziehen, denn die Spulenwicklungen gleiten einfach über die abgesenkten ersten Stützelemente hinweg.

Ergänzend oder alternativ kann optional vorgehen sein, dass der wendelförmige Wickelpfad eine erste Aufspannrichtung und eine hierzu quer ausgerichtete zweite Aufspannrichtung aufweist, wobei das Schablonenvorderteil und das Schablonenhinterteil derart relativ zueinander gelagert sind, dass eine erste Spannweite des wendelförmigen Wickelpfads in der ersten Aufspannrichtung durch Einstellen der Position des Schablonenvorderteils und/oder des Schablonenhinterteils einstellbar ist, wobei eine zweite Spannweite des wendelförmigen Wickelpfads in der zweiten Aufspannrichtung ausgebildet ist, und wobei nach dem Legen der Windungen um die Einziehlamellen und vor dem Abstreifen der Windungen die Position des Schablonenvorderteils und/oder des Schablonenhinterteils so eingestellt wird, dass sich die erste Spannweite verkürzt. Damit lassen sich die Spulenwicklungen leicht abstreifen.

Erfindungsgemäß kann eine Effizienzsteigerung des Stators erreicht werden, wenn in einem Verfahrensschritt das Legemuster der Mehrzahl an parallelen Leiterdrähten um 180 Grad (oder einem Vielfachen hiervon) gedreht wird, und zwar nach jeder halben oder ganzen Umdrehung der Wickelschablone. Die so hergestellten Verdrillungen in den Spulenwicklungen werden später beim Einziehen in die Einziehnuten an den Statorenden, d.h. außerhalb der Einziehnuten positioniert. Die Effizienzsteigerung lässt sich auch ohne Stützelemente entlang des Wickelpfades erzielen. Besonders effektiv ist die Verdrillung bei einem mehrlagigen Wickeln des Leiterdrahts auf die Wickelschablone. Hierfür sind die Stützelemente vorzugsweise vorgesehen. Um die Verdrillung zu erreichen, kann die Drahtzufuhreinrichtung derart mit einer Wendeeinrichtung gekoppelt sein, dass die Drahtzufuhreinrichtung mit dieser um 180 Grad (oder einem Vielfachen hiervon) hin- und herschwenkbar ist. Vorzugsweise geschieht dies um eine (virtuelle) Schwenkachse, die im Zentrum der parallel geführten Mehrzahl an Leiterdrähten liegt.

Weiterhin kann das Verfahren unter Einbezug aller vor- und nachstehenden Merkmale der Wickelschablone und der Wickelvorrichtung durchgeführt werden.

Sowohl die Wickelvorrichtung als auch das Verfahren können optional dahingehend ergänzt sein, dass wenigstens zwei der erfindungsgemäßen Wickelschablonen nebeneinander positioniert sind und mit dem gleichen Einziehwerkzeug korrespondieren. Eine solche zweite Wickelschablone kann über einen zweiten Drahtvorrat und eine zweite Drahtzufuhreinrichtung für zweite Drähte mit Draht versorgt werden. Bevorzugt sind die Drehantrieb der ersten und zweiten Wickelschablone gleichzeitig ansteuerbar, vorzugsweise synchronisiert. Bevorzugt sind die erste und die zweite Wickelschablone außerdem derart verstellbar zum Einziehwerkzeug gelagert, dass eine auf der ersten Wickelschablone erzeugte Spulenwicklung zeitgleich oder zeitnah mit einer auf der zweiten Wickelschablone erzeugten Spulenwicklung um eine oder einen Teil der Lamellen des Einziehwerkzeuges ablegbar ist. Das geschieht vorzugsweise diametral gegenüberliegend. Das hat den Vorteil, dass zeitgleich oder zeitnah wenigstens zwei Spulenwicklungen auf getrennten, aber mit der Vorrichtung funktional verknüpften Wickelschablonen herstellt werden können und diese dann auch zeitgleich in dem Einziehwerkzeug abgelegt werden können. Die Gesamtmaschine ist hierdurch kaum größer als eine Vorrichtung mit nur einer Wickelschablone, weil im Wesentlichen nur etwas mehr Grundfläche für die Drahtvorräte bei der Produktionsplanung vorzusehen sind. Die Wickelschablonen können an einem gemeinsamen Träger angeordnet sein, so dass ein gemeinsamer Zustellantrieb, die beiden Wickelschablonen mit den aufgewickelten Spulenwicklungen synchron relativ zum Einziehwerkzeug bewegen kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

Fig. 1 eine seitliche Skizzenansicht einer Wickelschablone;
Fig. 2 einen schematisch dargestellten Querschnitt durch eine Wickelschablone;

Fig. 3 einen schematisch dargestellten Längsschnitt durch eine Wickelschablone;
Fig. 4 eine Wickelvorrichtung mit zwei Wickelschablonen und einem Einziehwerkzeug; und
Fig. 5 einen Ausschnitt eines Querschnitts durch eine Einziehlamelle und eine Einziehnut.

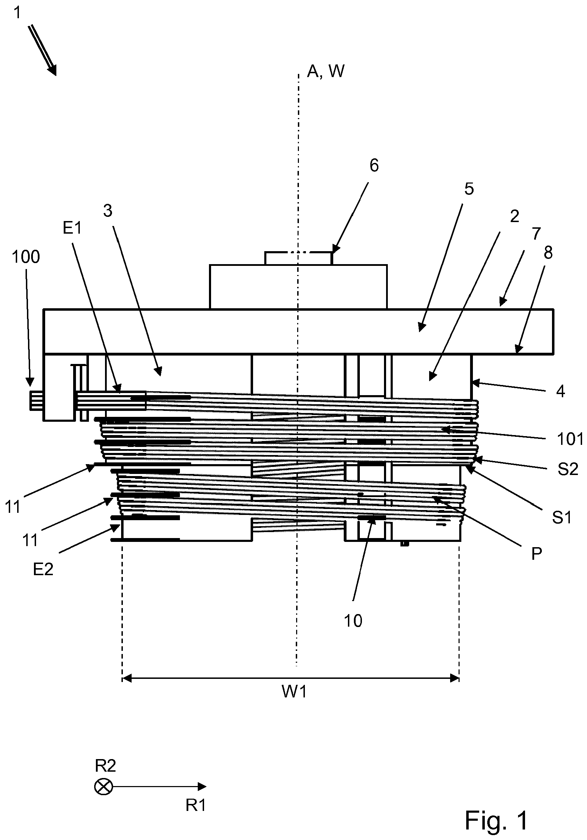

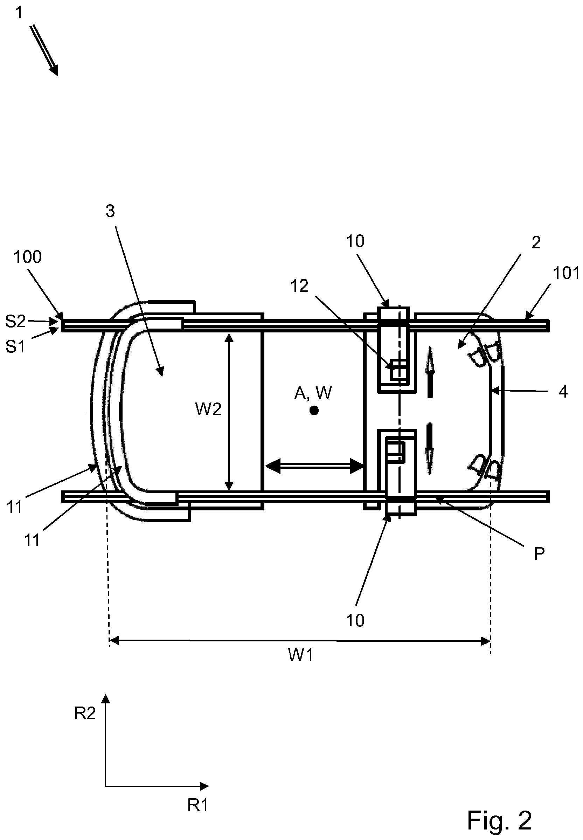

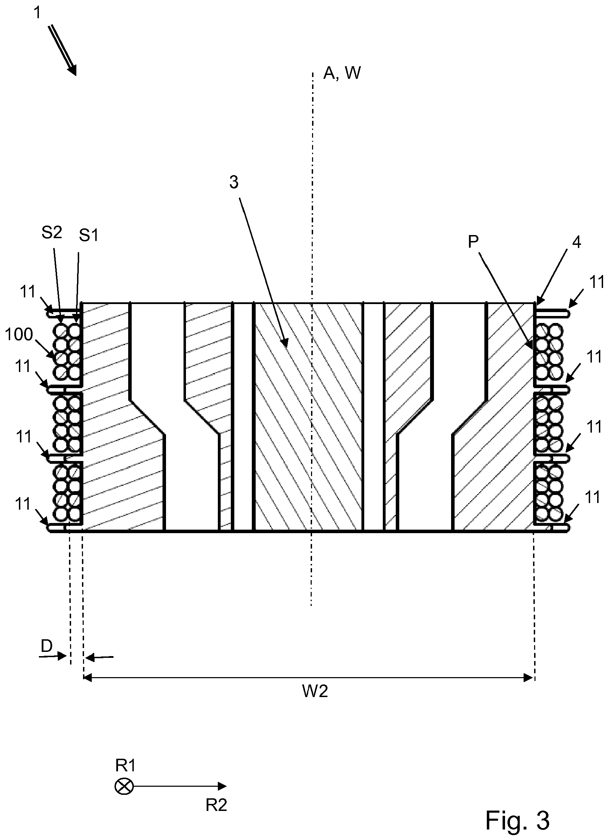

In **Fig. 1** ist eine Wickelschablone 1 in eine seitliche Skizzenansicht zu sehen. Die Wickelschablone 1 dient dem Wickeln von Leiterdraht 100 zu Spulenwicklungen 101 für Statoren, die anschließend in einem Einziehwerkzeug abgelegt werden. **Fig. 2** zeigt einen schematisch dargestellten Querschnitt und **Fig. 3** einen schematisch dargestellten Längsschnitt durch eine zu Fig. 1 vergleichbaren Wickelschablone. Gleiche Bezugzeichen (Bz.) kennzeichnen gleichartige technische Merkmale.

Man erkennt in Fig. 1, dass die Wickelschablone 1 ein Schablonenvorderteil 2 und ein Schablonenhinterteil 3 aufweist, die zusammen eine gemeinsame Umfangsfläche 4 ausbilden. Letztere spannt einen wendelförmigen Wickelpfad P um eine Wendelachse W für den Leiterdraht 100 auf. Der Wickelpfad P resultiert aus der späteren Wicklung des Leiterdrahts 100 auf der Umfangsfläche 4 und muss nicht durch physische Elemente auf der Umfangsfläche 4 erkennbar sein. Einzige Grundvoraussetzung ist, dass die Umfangsfläche 4 sich zum wendelförmigen Ablegen eines Leiterdrahtes 100 eignet. Die Umfangsfläche 4 ist im Wesentlichen parallel zur Wendelachse W ausgerichtet. Man erkennt vorliegend zwei Absätze der Umfangsfläche 4, wobei der Umfang um die Umfangsfläche 4 des oberen Absatzes größer ist als der Umfang des unteren Absatzes. Diese Absätze werden Wickelstufen genannt. Der wendelförmige Wickelpfad P ist also in Wickelstufen unterteilt, wobei der Umfang einer Windung um die Wickelschablone 1 von einem Anfang E1 des wendelförmigen Wickelpfads P hin zu einem Ende E2 des wendelförmigen Wickelpfads P stufenweise abnimmt. Die Spulenwicklungen 101 unterschiedlicher Wickelstufen werden später um abweichende Einziehlamellen eines Einziehwerkzeugs gelegt und in der Folge auch in unterschiedliche Einziehnuten eines Statorträgers eingezogen.

Der wendelförmige Wickelpfad P weist eine erste Aufspannrichtung R1 und eine hierzu quer ausgerichtete zweite Aufspannrichtung R2 auf, sodass eine aufgewickelte Spulenwicklung 101 einen ersten Durchmesser gemäß einer ersten Spannweite W1 des wendelförmigen Wickelpfads P in der ersten Aufspannrichtung R1 hat. Außerdem hat die aufgewickelte Spulenwicklung 101 einen hierzu quer ausgerichteten zweiten Durchmesser, der aus einer zweiten Spannweite W2 (siehe Fig. 2) des wendelförmigen Wickelpfads P in der zweiten Aufspannrichtung R2 resultiert.

Das Schablonenvorderteil 2 und das Schablonenhinterteil 3 sind an einer Vorderseite 8 einer Schablonenbasis 5 angeordnet. Dabei liegt der Anfang E1 des Wickelpfades P im Bereich der Schablonenbasis 5 und das Ende E2 am gegenüberliegenden Ende des Schablonenvorder- und Schablonenhinterteils 2, 3. Gegenüber der Vorderseite 8 weist die Schablonenbasis 5 eine Rückseite 7 auf, an der ein Koppelmittel 6 zur Anbindung an einen Rotationsantrieb angeordnet ist. Das Koppelmittel 6 definiert eine Drehachse Ader Wickelschablone 1.

Weiterhin ist das Schablonenhinterteil 3 bewegbar an der Schablonenbasis 5 gelagert, insbesondere längsverschiebbar. Das Schablonenvorderteil 2 ist fest mit der Schablonenbasis 5 verbunden. Dadurch sind das Schablonenvorderteil 2 und das Schablonenhinterteil 3 derart relativ zueinander gelagert, dass die erste Spannweite W1 des wendelförmigen Wickelpfads P durch Einstellen der Position des Schablonenhinterteils 3 entlang der ersten Aufspannrichtung R1 einstellbar ist. Hierzu wird vorzugsweise ein Stelltrieb vorgesehen, mit dem das Einstellen der Position des Schablonenhinterteils 3 erfolgt. Insgesamt ist die erste Spannweite W1 größer als die zweite Spannweite (siehe Bz. W2 in Fig. 2 und 3), welche nicht durch Einstellen geändert werden kann.

Des Weiteren ist eine Drahtfixierung im Bereich des Anfangs E1 des Wickelpfades P an der Schablonenbasis 5 angeordnet. In dieser werden die freien Enden des oder der Leiterdrähte 100 vor dem Aufwickeln fixiert.

Ferner erkennt man, dass Stützelemente 10, 11 entlang des Wickelpfades P angeordnet sind. Diese stehen über die Umfangsfläche 4 hinaus und begrenzen den wendelförmigen Wickelpfad P abschnittsweise seitlich. Hierzu sind die Stützelemente 10, 11 derart angeordnet, dass der wendelförmige Wickelpfad P eine homogene Breite aufweist. Die Stützelemente 10, 11 ragen um mehr als das 1,5-fache des Durchmessers des zu wickelnden Leiterdrahts 100 über die Umfangsfläche 4 hinaus.

Außerdem sind die Stützelemente 10, 11 länglich und quer zur Wendelachse W ausgerichtet. Optional können sie auch schräg ausgerichtet werden, insbesondere so, dass sie parallel zum Wickelpfad P ausgerichtet sind. Die Breite der Stützelemente 10, 11 quer zum Wickelpfad P beträgt in etwa dem Durchmesser des zu wickelnden Leiterdrahts 100.

Mittels einer Drahtzufuhreinrichtung (nicht gezeigt) für eine Mehrzahl an Leiterdrähten 100 wird gleichzeitig ein erster Teil der Mehrzahl an Leiterdrähten 100 parallel zueinander in einer ersten Schicht S1 auf dem Wickelpfad P und ein zweiter Teil der Mehrzahl an Leiterdrähten 100, nämlich die restlichen, parallel zueinander in einer zweiten Schicht S2 auf der ersten Schicht S1 abgelegt. Vorliegend werden gleichzeitig acht Leiterdrähte 100 in zwei vierer Schichten S1, S2 gewickelt. Alle Leiterdrähte 100 haben den gleichen Durchmesser und sind Kupferlackdrähte, die über einzelne Drahtspeicher mit einem Drahtvorrat bereitgestellt werden.

Um die Leiterdrähte 100 geordnet auf dem Wickelpfad P ablegen zu können, sollte die Drahtzufuhreinrichtung Drahtführungen für die Leiterdrähte 100 aufweisen, insbesondere Einzeldrahtführungen, bei denen ein Leiterdraht einzeln geführt ist, oder Mehrdrahtführungen, bei denen wenigstens zwei Leiterdrähte benachbart und sich berührend geführt werden. Die Drahtführungen für den ersten Teil der Mehrzahl an Leiterdrähten 100 sollte entlang einer ersten Reihe angeordnet sein, und die Drahtführungen für den zweiten Teil der Mehrzahl an Leiterdrähten 100 entlang einer zweiten Reihe. Die Reihen liegen dann vorzugsweise benachbart und parallel zueinander.

Die Stützelemente 10, 11 verhindern, dass die Leiterdrähte 100 der ersten Schicht S1 verrutschen. Außerdem verhindern sie, dass die Leiterdrähte 100 der zweiten Schicht S2 auf die Umfangsfläche 4 fallen, insbesondere dadurch, dass sie die erste Schicht S1 zusammenhalten.

Man erkennt, dass die homogene Breite des wendelförmigen Wickelpfads P etwas breiter ist als die Summe der Durchmesser der Leiterdrähte 100 der ersten Schicht S1 (vgl. insbesondere Fig. 3). Es passt aber kein weiterer Leiterdraht 100 mehr dazwischen. Mit anderen Worten ist die homogene Breite des wendelförmigen Wickelpfads P kleiner als die Summe der Durchmesser der Leiterdrähte 100 der ersten Schicht S1 zuzüglich dem Durchmesser eines weiteren (nicht vorhandenen) Leiterdrahts. Vorzugsweise entspricht die Anzahl der Leiterdrähte 100 in der ersten Schicht S1 der Anzahl der Leiterdrähte 100 in der zweiten Schicht S2.

Damit die Spulenwicklung 101 einfach nach unten von der Wickelschablone abrutschen kann, ist ein Teil der Stützelemente 10, 11 durch erste Stützelemente 10 ausgebildet, die sich dadurch auszeichnen, dass sie in die Umfangsfläche 4 absenkbar sind. Mehrere der ersten Stützelemente 10 teilen sich ein gemeinsames Antriebsmittel 12 (siehe hierzu Fig. 2), das als Schieberelement ausgebildet ist. Das Schieberelement ist entlang einer Schieberachse, die parallel zur Wickelachse W ausgerichtet ist, verschiebbar gelagert. Die Schieberachse ist hierdurch quer zu einer Bewegungsrichtung der angetriebenen ersten Stützelemente 10 ausgerichtet. Das Schieberelement ist mittels einer Steuerkurve bzw. einem Kurvengetriebe kinematisch mit den absenkbaren ersten Stützelementen 10 gekoppelt. Erkennbar sind alle ersten Stützelemente 10 in Richtung der zweiten Aufspannrichtung R2 ausgerichtet und am Schablonenvorderteil 2 angeordnet. Außerdem sitzen mehrere Stützelemente 10 auf einer gemeinsamen Trägerleiste, die parallel zur Wickelachse W ausgerichtet und in einer Nut im Schablonenvorderteil 2 absenkbar gelagert ist. Die ersten Stützelemente 10 sind entlang der Trägerleiste angeordnet. Die Nut ist in Richtung der Umfangsfläche 4 offen ausgebildet. In einer nicht abgesenkten Position, d.h. während dem Wickeln des Leiterdrahts, bildet die Trägerleiste mit den Bereichen zwischen den ersten Stützelementen 10 einen Teil der Umfangsfläche 4 und damit auch Abschnitte des Wickelpfads aus.

Es sind jedoch nicht alle Stützelemente 10, 11 absenkbar, sondern auch zweite Stützelemente 11 vorgesehen, die nicht in die Umfangsfläche 4 absenkbar sind. Diese sind alle am Schablonenhinterteil 3 angeordnet. Die zweiten Stützelemente 11 weisen in Richtung der ersten und der zweiten Aufspannrichtung R1, R2.

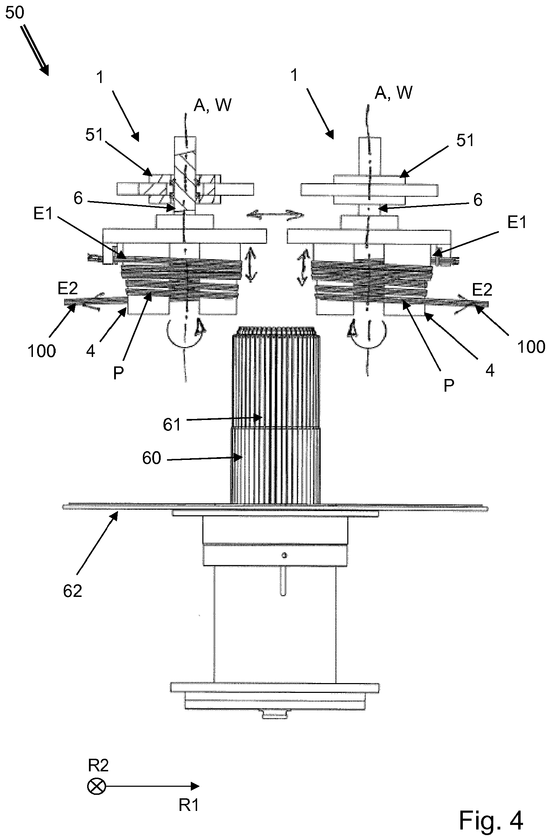

Fig. 4 zeigt eine Wickelvorrichtung 50 mit zwei Wickelschablonen 1 und einem Einziehwerkzeug 60. Die Erfindung bezieht sich jedoch ausdrücklich auch auf Ausführungsformen mit nur einer Wickelschablone 1. Die zwei Wickelschablonen 1 entsprechen jeweils in ihren technischen Merkmalen denjenigen der Figuren 1, 2 und 3. Die zwei Wickelschablonen 1 sind jedoch relativ zueinander spiegelbildlich ausgebildet und werden im Gegenlauf betrieben. Grundsätzlich könnten auch drei oder vier Wickelschablonen vorgesehene werden.

Jede der Wickelschablonen 1 ist hängend unterhalb eines Drehantriebs 51 gelagert. Unterhalb der Wickelschablonen 1 ist ein Werkzeugtisch 62 platziert, auf dem ein Einziehwerkzeug 60 angeordnet ist. Der Werkzeugtisch 62 mit dem Einziehwerkzeug 60 ist drehbar und verschiebbar gelagert. Das Einziehwerkzeug 60 verfügt über einen kreisförmigen Kranz aus parallel sowie geodätisch vertikal ausgerichteten Einziehlamellen 61. Die Anzahl der Einziehlamellen entspricht der Anzahl an Einziehnuten des später zu bestückenden Statorträgers. Außerdem sind die die Einziehlamellen 61 an ihrem unteren Ende befestigt und an ihrem oberen Ende freistehend.

Die Wickelschablonen 1 und das Einziehwerkzeug 60 sind nunmehr derart zueinander bewegbar gelagert, dass die auf den Wickelschablonen 1 aus Leiterdraht 100 gewickelten Spulenwicklungen 101 jeweils von oben um eine oder einen Teil der Einziehlamellen 61 legbar sind. Dies geschieht vorzugsweise diametral gegenüberliegend. Der Großteil der Spulenwicklungen 101 liegt dabei außerhalb des Einziehwerkzeugs 60 und wird auf dem Werkzeugtisch 62 abgelegt.

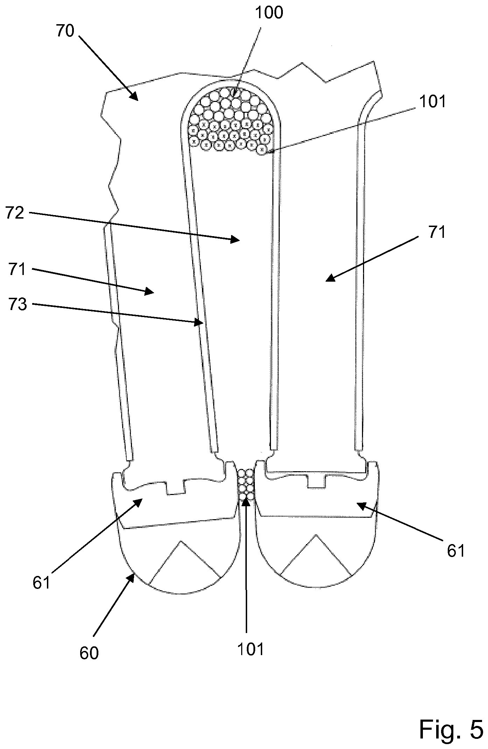

Mit solch einer Wickelvorrichtung 50 ist ein Verfahren zum Erzeugen von Spulenwicklungen 101 mit der Wickelschablone 1 und Bestücken des Einziehwerkzeuges 60 zum späteren Einziehen dieser Spulenwicklungen 101 in einen Statorträger (siehe Bezugszeichen 70 in Fig. 5) durchführbar, bei dem die folgenden Schritte durchgeführt werden:

a) Wickeln von Leiterdraht 100 auf die Wickelschablonen 1 entlang der wendelförmigen Wickelpfade P durch Drehen der Wickelschablonen 1;

b) anschließendes Legen der entlang der wendelförmigen Wickelpfade P verlaufenden Windungen des Leiterdrahtes 100 um eine oder einen Teil der Einziehlamellen 61 des Einziehwerkzeuges 60;

c) anschließendes Abstreifen der entlang der wendelförmigen Wickelpfade P verlaufenden Windungen des Leiterdrahtes 100 von den Wickelschablonen 1 über die Stützelemente 10, 11 hinweg und Ablegen dieser Windungen in dem Einziehwerkzeug 60.

Diese Schritte sollten wiederholt werden, bis alle Spulenwicklungen 101 einer Phase eines Stators eines Elektromotors in dem Einziehwerkzeug 60 abgelegt sind.

Vorzugsweise wird beim Wickeln auf jeder Wickelschablone 1 jeweils gleichzeitig ein erster Teil einer Mehrzahl an Leiterdrähten 100 parallel zueinander in einer ersten Schicht S1 auf dem Wickelpfad P und ein zweiter Teil der Mehrzahl an Leiterdrähten 100 parallel zueinander in einer zweiten Schicht S2 auf der ersten Schicht S1 abgelegt.

Die ersten Stützelemente 10 werden vorzugsweise nach dem Legen der Windungen um die Einziehlamellen 61 und vor dem Abstreifen der Windungen von der Wickelschablone 1 in die Umfangsfläche 4 abgesenkt.

Zusätzlich sollte nach dem Legen der Windungen um die Einziehlamellen 61 und vor dem Abstreifen der Windungen die Position des Schablonenhinterteils 3 so eingestellt werden, dass sich die erste Spannweite W1 verkürzt. Dies kann vor, nach oder gleichzeitig mit dem Absenken der ersten Stützelemente 10 erfolgen.

In **Fig. 5** ist ein Ausschnitt eines Querschnitts durch zwei Einziehlamellen 61 eines Einziehwerkzeugs 60 und eine Einziehnut 72 zwischen zwei Statorzähnen 71 eines Statorträgers 70 zu sehen. Die Einziehlamellen 61 sind formschlüssig auf die Statorzähne 71 aufgesetzt, damit sie beim Einziehen nicht Ihre Lage verändern können. Innerhalb der Einziehnut 72 ist zunächst eine Isolationsschicht 73 eingebracht, damit im Falle eines Isolierungsbruchs an einem Leiterdraht 100 nicht der Statorträger 70 unter Spannung steht. Als Isolationsschicht 73 kann beispielsweise ein Isolationspapier in die Einziehnut 72 eingelegt werden. Erkennbar sind bereits einige Spulenwicklungen 101 in die Einziehnut 72 eingezogen worden. Zwischen den zwei Einziehlamellen 61 werden außerdem weitere acht Leiterdrähte 100 einer Spulenwicklung 101 hindurchgeschoben. Diese liegen wie beim Wickeln in einer ersten und einer zweiten Schicht, sodass immer zwei nebeneinanderliegende Leiterdrähte 100 gleichzeitig in die Einziehnut gezogen werden. Hierzu ist der Abstand zwischen den Einziehlamellen geringfügig größer als der Faktor aus dem Durchmesser eines Leiterdrahts und der Anzahl an Schichten. Außerdem ist der Abstand kleiner als der Faktor aus dem Durchmesser eines Leiterdrahts und der Anzahl an Schichten zzgl. 1. D.h.

$$(\text{Durchmesser eines Leiterdrahts}) \times (\text{Anzahl der Schichten}) < \text{Abstand} < (\text{Durchmesser eines Leiterdrahts}) \times (\text{Anzahl der Schichten} + 1).$$

Die Erfindung betrifft daher auch ein ergänzendes oder eigenständiges Verfahren zum Einziehen von Spulenwicklungen, bei dem Spulenwicklungen mit Hilfe eines Einziehwerkzeugs mit Einziehlamellen und einem Einziehstern bzw. Einziehpilz durch einen Statorträger gezogen werden, wobei der Abstand zwischen den Einziehlamellen geringfügig größer ist als der Faktor aus dem Durchmesser eines Leiterdrahts und der Anzahl an Schichten gemäß einer vorausgegangen Wicklung der Spulenwicklungen, und wobei der Abstand kleiner ist als der Faktor aus dem Durchmesser eines Leiterdrahts und der Anzahl an Schichten zzgl. 1, und bei dem eine Anzahl an Leiterdrähten gemäß der Anzahl der Schichten gleichzeitig benachbart in die Einziehnut eingezogen wird.

Die Erfindung ist nicht auf eine der vorbeschriebenen Ausführungsformen beschränkt, sondern in vielfältiger Weise im Rahmen des durch die Ansprüche 1 und 4 definierten Bereiches abwandelbar.

### Bezugszeichenliste

| | | | | |
|---|---|---|---|---|
| 1 | Wickelschablone | | 70 | Statorträger |
| 2 | Schablonenvorderteil | | 71 | Statorzahn |
| 3 | Schablonenhinterteil | | 72 | Einziehnut |
| 4 | Umfangsfläche | | 73 | elektrische Isolationsschicht |
| 5 | Schablonenbasis | | | |
| 6 | Koppelmittel | | 100 | Leiterdraht |
| 7 | Rückseite | | 101 | Spulenwicklung |
| 8 | Vorderseite | | | |
| | | | A | Drehachse |
| 10 | erste Stützelemente | | D | Durchmesser (des Leiterdrahts) |
| 11 | zweite Stützelemente | | E1 | Anfang (des Wickelpfads) |
| 12 | Antriebsmittel (des Stützelements) | | E2 | Ende (des Wickelpfads) |
| | | | P | wendelförmiger Wickelpfad |
| 50 | Wickelvorrichtung | | R1 | erste Aufspannrichtung |
| 51 | Drehantrieb | | R2 | zweite Aufspannrichtung |
| | | | S1 | erste Schicht |
| 60 | Einziehwerkzeug | | S2 | zweite Schicht |
| 61 | Einziehlamellen | | W | Wendelachse |
| 62 | Werkzeugtisch | | W1 | erste Spannweite |
| | | | W2 | zweite Spannweite |

**Patentansprüche**

1. **Verfahren** zum Erzeugen von Spulenwicklungen (101) zum späteren Einziehen in Einziehnuten (72) eines Statorträgers (70) umfassend die folgenden Schritte:

   a) Wickeln von Leiterdraht (100) auf eine Wickelschablone (1) entlang eines wendelförmigen Wickelpfads (P) durch Drehen der Wickelschablone (1);
   b) Drehen eines Legemusters einer Mehrzahl an parallelen Leiterdrähten um 180 Grad oder einem Vielfachen hiervon nach jeder halben oder ganzen Umdrehung der Wickelschablone zur Herstellung von Verdrillungen, die später beim Einziehen der Spulenwicklungen in die Einziehnuten (72) an den Statorenden außerhalb der Einziehnuten (72) positioniert werden;
   c) Legen von entlang des wendelförmigen Wickelpfads (P) verlaufenden Windungen des Leiterdrahtes (100) um eine oder einen Teil von Einziehlamellen (61) eines Einziehwerkzeuges (60);
   d) Abstreifen der entlang des wendelförmigen Wickelpfads (P) verlaufenden Windungen des Leiterdrahtes (100) von der Wickelschablone (1) und Ablegen dieser Windungen in dem Einziehwerkzeug (60).

2. Verfahren nach Anspruch 1, wobei der Leiterdraht auf der Wickelschablone mehrlagig gewickelt wird.

3. Verfahren nach einem der vorhergehenden Ansprüche, wobei die Wickelschablone (1) eine Drahtzufuhreinrichtung für eine Mehrzahl an Leiterdrähten (100) aufweist, mit der beim Wickeln gleichzeitig ein erster Teil der Mehrzahl an Leiterdrähten (100) parallel zueinander in einer ersten Schicht (S1) auf dem Wickelpfad (P) und ein zweiter Teil der Mehrzahl an Leiterdrähten (100) parallel zueinander in einer zweiten Schicht (S2) auf der ersten Schicht (S1) abgelegt wird.

4. **Wickelvorrichtung** (50) mit einer Wickelschablone (1) die an einem Drehantrieb (51) gelagert ist, und mit einem Einziehwerkzeug (60), das einen Kranz aus parallel sowie geodätisch vertikal ausgerichteten Einziehlamellen (61) aufweist, wobei die Wickelschablone (1) und das Einziehwerkzeug (60) derart zueinander bewegbar gelagert sind, dass eine auf der Wickelschablone (1) aus Leiterdraht (100) gewickelte Spulenwicklung (101) von oben um eine oder einen Teil der Einziehlamellen (61) legbar ist, **dadurch gekennzeichnet, dass** die Wickelschablone (1) eine Drahtzufuhreinrichtung aufweist, die derart mit einer Wendeeinrichtung gekoppelt ist, dass die Drahtzufuhreinrichtung mit dieser um 180 Grad (oder einem Vielfachen hiervon) hin- und herschwenkbar ist, wobei die Wickelschablone (1) ein Schablonenvorderteil (2) und ein Schablonenhinterteil (3) aufweist, wobei das Schablonenvorderteil (2) und das Schablonenhinterteil (3) mit einer Umfangsfläche (4) einen wendelförmigen Wickelpfad (P) um eine Wendelachse (W) für den Leiterdraht (100) aufspannen, wobei mit der Drahtzufuhreinrichtung gleichzeitig ein erster Teil der Mehrzahl an Leiterdrähten (100) parallel zueinander in einer ersten Schicht (S1) auf dem Wickelpfad (P) und ein zweiter Teil der Mehrzahl an Leiterdrähten (100) parallel zueinander in einer zweiten Schicht (S2) auf der ersten Schicht (S1) ablegbar ist.

5. Wickelvorrichtung (50) nach Anspruch 4, **dadurch gekennzeichnet, dass** die Wendeeinrichtung um eine Schwenkachse hin- und herschwenkbar ist, die im Zentrum einer Mehrzahl an parallelen Leiterdrähten liegt.

6. Wickelvorrichtung (50) nach einem der Ansprüche 4 oder 5, **dadurch gekennzeichnet, dass** der Leiterdraht (100) auf der Wickelschablone (1) mehrlagig gewickelt ist.

7. Wickelvorrichtung (50) nach Anspruch 5 oder 6, **dadurch gekennzeichnet, dass** Stützelemente (10, 11) entlang des Wickelpfades (P) angeordnet sind, die über die Umfangsfläche (4) hinausstehen und den wendelförmigen Wickelpfad (P) seitlich begrenzen.

8. Wickelvorrichtung (50) nach Anspruch 7, **dadurch gekennzeichnet, dass** die Stützelemente (10, 11) derart angeordnet sind, dass der wendelförmige Wickelpfad (P) eine homogene Breite aufweist.

9. Wickelvorrichtung (50) nach einem der Ansprüche 7 bis 8, **dadurch gekennzeichnet, dass** die Stützelemente (10, 11) wenigstens um das 1,5-fache, vorzugsweise maximal um das 3-fache, des Durchmessers (D) des zu wickelnden Leiterdrahts (100) über die Umfangsfläche (4) hinausstehen.

10. Wickelvorrichtung (50) nach einem der Ansprüche 6 bis 9, **dadurch gekennzeichnet, dass** der wendelförmige Wickelpfad (P) eine erste Aufspannrichtung (R1) und eine hierzu quer ausgerichtete zweite Aufspannrichtung (R2) aufweist,

wobei das Schablonenvorderteil (2) und das Schablonenhinterteil (3) derart relativ zueinander gelagert sind, dass eine erste Spannweite (W1) des wendelförmigen Wickelpfads (P) in der ersten Aufspannrichtung (R1) durch Einstellen der Position des Schablonenvorderteils (2) und/oder des Schablonenhinterteils (3) einstellbar ist,

und wobei eine zweite Spannweite (W2) des wendelförmigen Wickelpfads (P) in der zweiten Aufspannrichtung (R2) ausgebildet ist.

## Claims

1. **Method** for the production of coil windings (101) for the future insertion into insertion grooves (72) of a stator support (70) comprising the following steps:

   a) winding conductive wire (100) onto a winding template (1) along a helical winding path (P) by turning the winding template (1);
   b) turning a laying pattern of a plurality of parallel conductive wires about 180° or a multiple thereof after every half or full turn of the winding template for producing twists which are later positioned at the ends of the stators outside the insertion grooves (72) when introducing the coil windings into the insertion grooves (72);
   c) laying windings of the conductive wire (100) extending along the helical winding path (P) about one or some of the insertion fins (61) of an insertion tool (60);
   d) stripping the windings of the conductive wire (100) extending along the helical winding path (P) from the winding template (1) and laying these windings into the insertion tool (60).

2. Method according to claim 1, wherein the conductive wire is wound onto the winding template in several layers.

3. Method according to any of the preceding claims wherein the winding template (1) has a wire supply apparatus for a plurality of conductive wires (100), with which during the winding a first part of the plurality of conductive wires (100) is laid simultaneously parallel to one another in a first layer (51) onto the winding path (P) and a second part of the plurality of conductive wires (100) is laid parallel to one another in a second layer (52) on top of the first layer (51).

4. **Winding device** (50) having a winding template (1) which is mounted on a rotation drive (51), and having an insertion tool (60) which has a crown of insertion fins (61) aligned parallel and geodetically vertical, wherein the winding template (1) and the insertion tool (60) are mounted so as to be movable in relation to one another such that a coil winding (101) of conductive wire (100) wound on the winding template (1) can be laid from above about one or some of the insertion fins (61), **characterised in that** the winding template (1) has a wire supply apparatus which is coupled with a turning apparatus such that the wire supply apparatus can be pivoted to and fro about 180° (or a multiple thereof) with this, wherein the winding template (1) has a template front part (2) and a template rear part (3), wherein the template front part (2) and the template rear part (3) subtend with a peripheral surface (4) a helical winding path (P) about a helical axis (W) for the conductive wire (100), wherein with the wire supply apparatus simultaneously a first part of the plurality of conductive wires (100) can be laid parallel to one another in a first layer (51) on the winding path (P) and the second part of the plurality of conductive wires (100) can be laid parallel to one another in a second layer (52) on top of the first layer (51).

5. Winding device (50) according to claim 4, **characterised in that** the turning apparatus can be pivoted to and fro about a pivot axis which is situated in the centre of a plurality of parallel conductive wires.

6. Winding device (50) according to any of claims 4 or 5, **characterised in that** the conductive wire (100) is wound in several layers onto the winding template (1).

7. Winding device (50) according to claim 5 or 6, **characterised in that** support elements (10, 11) are arranged along the winding path (P) which protrude beyond the peripheral surface (4) and delimit the helical winding path (P) laterally.

8. Winding device (50) according to claim 7, **characterised in that** the support elements (10, 11) are arranged such that the helical winding path (P) has a homogeneous width.

9. Winding device (50) according to any of claims 7 to 8, **characterised in that** the support elements (10, 11) protrude at least by a factor of 1.5, preferably by a maximum factor of 3, of the diameter (D) of the conductive wire (100) to be wound, beyond the peripheral surface (4).

**10.** Winding device (50) according to any of claims 6 to 9, **characterised in that** the helical winding path (P) has a first spanning direction (R1) and a second spanning direction (R2) aligned perpendicularly thereto,
wherein the template front part (2) and the template rear part (3) are mounted relatively to one another such that the first span width (W1) of the helical winding path (P) can be set in the first spanning direction (R1) by setting the position of the template front part (2) and/or of the template rear part (3), and wherein a second span width (W2) of the helical winding path (P) is formed in the second spanning direction (R2).

**Revendications**

**1. Procédé** de génération d'enroulements de bobine (101) pour l'intégration ultérieure dans des rainures d'intégration (72) d'un support de stator (70) comprenant les étapes suivantes :

a) enrouler un fil conducteur (100) sur un gabarit d'enroulement (1) le long d'un trajet d'enroulement (P) hélicoïdal par rotation du gabarit d'enroulement (1) ;
b) tourner un motif de pose d'une pluralité de fils conducteurs parallèles de 180 degrés ou un multiple après chaque demi-rotation ou rotation entière du gabarit d'enroulement pour l'établissement de torsions qui sont positionnées plus tard lors de l'intégration des enroulements de bobine dans les rainures d'intégration (72) sur les extrémités de stator en dehors des rainures d'intégration (72) ;
c) poser des enroulements s'étendant le long du trajet d'enroulement (P) hélicoïdal du fil conducteur (100) autour d'une ou d'une partie de lamelles d'intégration (61) d'un outil d'intégration (60) ;
d) racler les enroulements s'étendant le long du trajet d'enroulement (P) hélicoïdal du fil conducteur (100) du gabarit (1) et déposer ces enroulements dans l'outil d'intégration (60).

**2.** Procédé selon la revendication 1, dans lequel le fil conducteur est enroulé en plusieurs couches sur le gabarit d'enroulement.

**3.** Procédé selon l'une quelconque des revendications précédentes, dans lequel le gabarit d'enroulement (1) présente un dispositif d'amenée de fil pour une pluralité de fils conducteurs (100), avec lequel, lors de l'enroulement, simultanément une première partie de la pluralité de fils conducteurs (100) est déposée parallèlement les uns aux autres dans une première couche (51) sur le trajet d'enroulement (P) et une seconde partie de la pluralité de fils conducteurs (100) est déposée parallèlement les uns aux autres dans une seconde couche (S2) sur la première couche (51).

**4. Dispositif d'enroulement** (50) avec un gabarit d'enroulement (1) qui est logé sur un entraînement de rotation (51), et avec un outil d'intégration (60) qui présente une couronne de lamelles d'intégration (61) orientées parallèlement ainsi que verticalement de manière géodésique, dans lequel le gabarit d'enroulement (1) et l'outil d'intégration (60) sont logés de manière mobile l'un par rapport à l'autre de telle manière qu'un enroulement de bobine (101) enroulé sur le gabarit d'enroulement (1) du fil conducteur (100) puisse être posé de dessus autour d'une ou une partie des lamelles d'intégration (61), **caractérisé en ce que** le gabarit d'enroulement (1) présente un dispositif d'amenée de fil qui est couplé à un dispositif de retournement de telle manière que le dispositif d'amenée de fil puisse être pivoté alternativement avec celui-ci de 180 degrés (ou un multiple), dans lequel le gabarit d'enroulement (1) présente une partie avant de gabarit (2) et une partie arrière de gabarit (3), dans lequel la partie avant de gabarit (2) et la partie arrière de gabarit (3) serrent avec une surface périphérique (4) un trajet d'enroulement (P) hélicoïdal autour d'un axe de retournement (W) pour le fil conducteur(100), dans lequel avec le dispositif d'amenée de fil simultanément une première partie de la pluralité de fils conducteurs (100) peut être déposée parallèlement les uns aux autres dans une première couche (51) sur le trajet d'enroulement (P) et une seconde partie de la pluralité de fils conducteurs (100) parallèlement les uns aux autres dans une seconde couche (S2) sur la première couche (51).

**5.** Dispositif d'enroulement (50) selon la revendication 4, **caractérisé en ce que** le dispositif de retournement peut pivoter alternativement autour d'un axe de pivotement qui se trouve au centre d'une pluralité de fils conducteurs parallèles.

**6.** Dispositif d'enroulement (50) selon l'une quelconque des revendications 4 ou 5, **caractérisé en ce que** le fil conducteur (100) est enroulé en plusieurs couches sur le gabarit d'enroulement (1).

**7.** Dispositif d'enroulement (50) selon la revendication 5 ou 6, **caractérisé en ce que** des éléments d'appui (10, 11) sont agencés le long du trajet d'enroulement (P), lesquels dépassent de la surface périphérique (4) et délimitent latéralement le trajet d'enroulement (P) hélicoïdal.

8. Dispositif d'enroulement (50) selon la revendication 7, **caractérisé en ce que** les éléments d'appui (10, 11) sont agencés de telle manière que le trajet d'enroulement (P) hélicoïdal présente une largeur homogène.

9. Dispositif d'enroulement (50) selon l'une quelconque des revendications 7 à 8, **caractérisé en ce que** les éléments d'appui (10, 11) dépassent au moins de 1,5 fois, de préférence au maximum de 3 fois, le diamètre (D) du fil conducteur (100) à enrouler de la surface périphérique (4).

10. Dispositif d'enroulement (50) selon l'une quelconque des revendications 6 à 9, **caractérisé en ce que** le trajet d'enroulement (P) hélicoïdal présente un premier sens de serrage (R1) et un second sens de serrage (R2) orienté transversalement à celui-ci,
dans lequel la partie avant de gabarit (2) et la partie arrière de gabarit (3) sont logées de manière relative l'une à l'autre de telle manière qu'une première portée (W1) du trajet d'enroulement (P) hélicoïdal soit réglable dans le premier sens de serrage (R1) par réglage de la position de la partie avant de gabarit (2) et/ou de la partie arrière de gabarit (3), et dans lequel une seconde portée (W2) du trajet d'enroulement (P) hélicoïdal est réalisée dans le second sens de serrage (R2).

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- DE 3222181 A
- EP 0574841 A1
- DE 102013221205 A1